# EUROPEAN PATENT APPLICATION

(11) **EP 4 365 022 A1**
(43) Date of publication of application: **08.05.2024**
(21) Application number: 23207006.0
(22) Date of filing: 31.10.2023
(51) Int. Cl.: B60N 2/844, B60N 2/815

(54) **PUSH BUTTON**

(30) Priority: 03.11.2022 EP 22383059; 18.04.2023 EP 23168609
(71) Applicant: Illinois Tool Works Inc., Glenview IL 60025 (US)
(72) Inventor: MORENO SERRA, Albert, Glenview, Illinois, 60025 (US)
(74) Representative: Meissner Bolte Partnerschaft mbB

(57) **Abstract**

The invention relates to a push button, particularly a spring-loaded or spring-biased press or push button suitable for a vehicle component. The push button includes a body portion including a proximal end, contactable by a user, and a distal end including an elastomeric member. The elastomeric member is operably coupled to the distal end of the body portion and arranged to engage a contact element of a structure. The push button is operably mountable to the structure and movable in a first direction from a first position, in which the push button locks an adjustable component to the structure, to a second position in which the adjustable component is unlocked from the structure. The elastomeric member is configured to provide a biasing force back towards the first position when the push button is moved towards the second position.

## Description

The invention relates to a push button. In particular, the invention relates to spring loaded or spring biased press or push buttons suitable for vehicle components, such as, for example, a headrest guide for adjustable headrests.

### BACKGROUND

Headrest guide assemblies or sleeve assemblies are known in the art. Typically, vehicle seats and respective headrests are designed to accommodate individuals having a range of heights. Thus, adjustable headrests are mounted on one or more supports, such as one or more cylindrical rods. To provide an adjustable headrest, one of the supports may include a series of notches along a first surface, each notch defining a possible position for the headrest. A guide assembly may be mounted to the seat in order to engage the notches so that the headrest can be held in a desired position.

As used herein, an adjustable headrest is an example of an adjustable component. A seat is an example of a structure to which an adjustable component, in this case an adjustable headrest, is mounted.

In certain examples of an adjustable headrest, a spring biased button is typically provided on the guide assembly that can be pressed by a user to release the fixation of the guide assembly so that the support can be moved up or down between notches.

These spring biased or spring loaded buttons utilise metal band springs, such as, for example, leaf springs, or any other suitable metal spring design configured to bias the button towards a "locked" position. However, during manufacture of the these buttons, metal band spring elements are among the most expensive components and are made from a material where its productions has a significant impact on the natural resources and the environment.

### SUMMARY OF INVENTION

The invention is set out in the appended claims.

According to one aspect, a push button includes
- a body portion includes a proximal end, contactable by a user, and a distal end includes an elastomeric member operably coupled to the distal end of the body portion and arranged to engage a contact element of a structure,

wherein the push button is operably mountable to the structure and movable in a first direction from a first position, in which the push button locks an adjustable component to the structure, to a second position in which the adjustable component is unlocked from the structure, and
wherein the elastomeric member is configured to provide a biasing force back towards the first position when the push button is moved towards the second position.

Suitably, the elastomeric member may be deformed by the contact element to provide the biasing force back towards the first position.

Suitably, the distal end may include a pair of support members spaced apart in a direction substantially perpendicular to the first direction, wherein the elastomeric member extends lengthwise between the support members so as to be deformed in a transverse direction to provide the biasing force.

Suitably, the elastomeric member adjoins each support member at a connection zone. Suitably, each connection zone is formed by over-moulding or co-moulding the elastomeric member to each support member. That is, the push button is manufacturable using a two-step moulding process in which the body portion, including the support member or support members are formed in a first moulding step, and the elastomeric member is formed in a second moulding step to adjoin the elastomeric member to the body portion, for example to adjoin the support member of the body portion. In this way, the elastomeric member is fixedly attached to the body portion during manufacturing, reducing assembly time for the push button.

Suitably, wherein the elastomeric member may include at least one projecting member extending away from the distal end along a lengthwise axis, wherein the projecting member is configured as to be elastically compressed along the lengthwise axis to provide the biasing force. That is, in certain examples, each projecting member may be deformed by a respective contact element to provide the biasing force back towards the first position. In certain other examples, each projecting member may be deformed by a part of the same contact element.

Suitably, the elastomeric member may include a cylinder portion or a bellows portion arranged so that a central axis of the cylinder portion or the bellows portion provides the lengthwise axis.

Suitably, in the first position, the elastomeric member may be partially deformed to provide a preloaded biasing force. Stated differently, in the first position, an elastomeric member is held in a first condition and, in the second position, the elastomeric member is held in a second condition. Thus, in the first condition, the elastomeric member may be held under pre-tension or under pre-compression and in the second condition, the elastomeric member is held under increased tension or increased compression. In this way, as the push button is moved from the first position to the second position, the tension or compression applied to the elastomeric member is increased, providing an increased biasing force in use.

Suitably, in the first position, the elastomeric member is not partially deformed. Stated differently, in the first position, an elastomeric member is held in a first condition and, in the second position, the elastomeric member is held in a second condition. Thus, in the first condition, the elastomeric member is held without pre-tension or without pre-compression and in the second condition, the elastomeric member is held under tension or under compression. In this way, the tension or compression applied to the elastomeric member that provides the biasing force is derived only from moving the push button from the first position to the second position.

Suitably, the push button may also include at least one guide element engageable with a respective mating portion provided on the structure so as to constrain the push button to move linearly relative to the structure.

Suitably, the push button may also include a stop member configured to limit the push button at the first position when the biasing force moves the push button back to the first position.

Suitably, the elastomeric member may include, or may be formed from, a material including at least one of: a thermoplastic polyurethane, a thermoplastic elastomer, or a silicone rubber.

Suitably, at least the body portion may include, or may be formed from, a thermoplastic material, for example a polypropylene material, a polyamide material such as PA6, or a polyamide material with reinforcing fibres such as glass-fibre reinforced PA6.

Suitably, the elastomeric member may be co-moulded with the body portion.

According to another aspect, an assembly is provided, including a push button, moveably mounted therein, wherein the assembly is a headrest guide assembly, or a sleeve assembly, for a vehicle component. The headrest guide assembly, or sleeve assembly, may include a push button, as described herein.

According to a further aspect, a headrest is provide, including a headrest guide assembly having a push button. The headrest guide assembly is mounted in a headrest and is mountable to a vehicle component, typically a seat, so that the headrest, including the headrest guide assembly, is adjustable relative to the vehicle component. The push button of the headrest guide assembly includes a body portion with: a proximal end, contactable by a user, and a distal end with an elastomeric member operably coupled to the distal end of the body portion and arranged to engage a contact element of the vehicle component; wherein the push button is operably mounted to the headrest guide assembly and movable in a first direction from a first position, in which the push button locks an adjustable component to the vehicle component, to a second position in which the adjustable component is unlocked from the vehicle component; and wherein the elastomeric member is configured to provide a biasing force back towards the first position when the push button is moved towards the second position.

Suitably, the headrest guide assembly is mounted to an opening provided on an outer surface of the headrest. The headrest guide assembly may be mounted to the opening so that the proximal end of the button is contactable by a user. The button may be oriented so that, in the second position, the button is retracted from the outer surface.

Suitably, the headrest guide assembly includes a push button, or a sleeve assembly including a push button. The headrest guide assembly may be provided within any one of a head rest bezel assembly or a head rest of vehicle component.

Suitably, the structure may include a headrest guide assembly mounted to a vehicle seat.

Suitably, the adjustable component may be an adjustable seat headrest. More suitably, the seat headrest may include a cylindrical rod as described herein.

Suitably, the structure may be a headrest guide assembly mounted to a vehicle seat, and the adjustable component may be an adjustable seat headrest. The seat headrest may include a cylindrical rod as described herein. Where the headrest guide assembly is mounted to a vehicle seat, the headrest is adjustable relative to both the vehicle seat and the headrest guide assembly.

Suitably, a headrest guide assembly may include the push button to selectively lock and unlock the seat headrest to the vehicle seat.

Suitably, a push button may be received in a suitable slot provided on the headrest guide assembly so as to be movably mounted relative to the vehicle seat. Once mounted, the push button may be moveable between a first a first position, in which the push button locks the headrest to the seat, and a second position, in which the headrest is unlocked from the seat.

Suitably, the opening through the push button may be dimensioned to receive a cylindrical rod of the headrest therethrough. The cylindrical rod may be moveable within the opening, subject to the locking and unlocking to the seat provided by the push button.

Suitably, a cylindrical rod may include a series of notches therealong. In this way, the adjustable component may be locked to the structure by selecting which notch is engaged by the locking tab, thereby selecting the position of the adjustable component relative to the structure. The locking tab may extend into the opening. The locking tab may be matingly engageable with a complementary notch on the cylindrical rod when the push button is in the first position.

Suitably, in the first position, the locking tab of the push button may engage a notch on the cylindrical rod, to lock the headrest to the seat. The push button may be in the first position relative to the headrest guide assembly such that the seat headrest is locked to the vehicle seat at a first seat headrest height. In the first position the elastomeric member may be in a first condition.

Suitably, when the seat headrest is at the second headrest height, a second notch may be aligned with the locking tab. Action on the push button to maintain it in the second position may be released when the seat headrest is at the second headrest height. The elastomeric member is free to recover from the second condition to the first condition. The tension applied to the elastomeric member in the second position provides a biasing force to move the push button back towards the first position.

Suitably, as the push button moves back towards the first position, the locking tab may engage the second notch of the cylindrical rod. The seat headrest is thereby locked to the vehicle seat at the second headrest height.

Suitably, as the push button returns to the first position from the direction of the second position, the stop member may abuttingly engage a corresponding stop feature on the headrest guide assembly. The stop member may thereby limit the push button at the first position when the biasing force moves the push button back to the first position. That is, once the push button is mounted to a headrest guide assembly, the stop member may prevent push button from sliding out of the receiving slot and becoming dismounted from the headrest guide assembly.

Other technical features may be readily apparent to one skilled in the art from the following figures, descriptions, and claims.

Certain examples, provide a push button formed with a reduced number of parts. Certain examples provide simplified manufacturing, in particular providing a push button that can be formed in a single manufacturing process, such as co-moulding injection moulded parts. Manufacturing costs thereby reduced.

Certain examples provide a push button which is more easily mounted to a vehicle component. In particular, a push button formed as, or assembled into, a single component may be easily mounted to a vehicle component in a single assembly operation, for example by inserting into a compatible opening or slot provided on the vehicle component.

Certain examples prevent a push button from becoming dismounted from the structure.

### BRIEF DESCRIPTION OF THE DRAWINGS

Examples of the invention are now described, by way of example only, hereinafter with reference to the accompanying drawings, in which:
FIG. 1 illustrates an example push button of the prior art with a metal band spring;
FIG. 2 illustrates a perspective view of an example push button utilising an elastomeric member in the form of an elastomeric band; and
FIG. 3 illustrates a perspective view of an alternative example push button utilising an elastomeric member in the form of projecting member.

In the drawings, like reference numerals refer to like parts.

### DETAILED DESCRIPTION

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

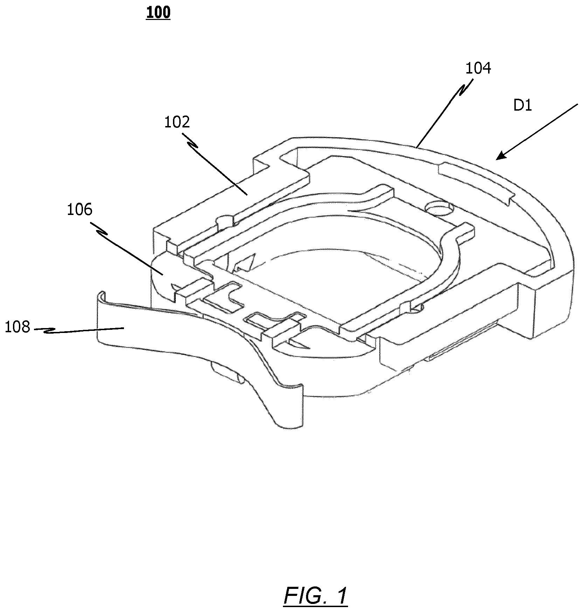

Referring now to FIG. 1, there is shown an example push button of the prior art. The push button 100 includes a body portion 102 with a proximal end 104, contactable by a user to move the button relative to a structure, and a distal end 106. When the push button 100 is mounted to a structure a metal band spring 108 is arranged to abut the distal end 106. The metal band spring 108 is positioned between the push button 100 and a contact element provided on the structure.

When the user presses on the proximal end 104, the moves the push button from a locked position in a first direction D1. The metal band spring 108 is thereby configured to bias the button back towards a position.

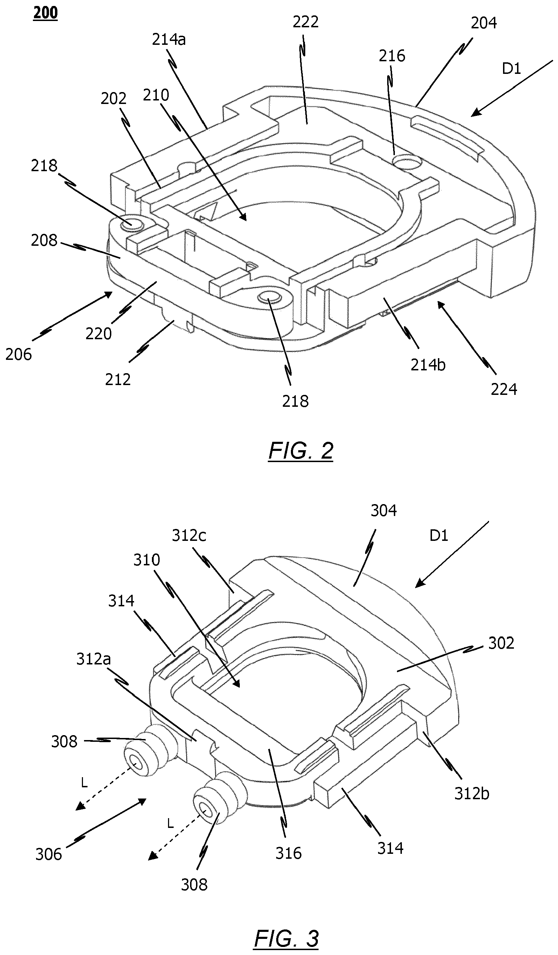

Referring now to FIG. 2, there is shown an example push button 200 according to an aspect. The push button 200 includes a body portion 202 comprising a proximal end 204, contactable by a user, and a distal end 206 comprising an elastomeric member 208. The elastomeric member 208 is operably coupled to the distal end 206 of the body portion 202 and arranged to engage a contact element of a structure (not shown). The push button 200 is operably mountable to the structure and movable in a first direction D1 from a first position, in which the push button 200 locks an adjustable component to the structure, to a second position in which the adjustable component is unlocked from the structure. The elastomeric member 208 is configured to provide a biasing force back towards the first position when the push button 200 is moved towards the second position.

The body portion 202 of the push button 200 is substantially planar. That is, the push button 200 extends in a first axis, extending substantially in the first direction D1, and in a second axis extending in a perpendicular to the first axis. The distal end 206 and the proximal end 204 are spaced apart along the first axis. A first side and a second side are spaced apart along the second axis. Together, the distal end 206, proximal end 204, first side and second side form a perimeter edge around the upper surface 222 and the lower surface 224 of the planar body portion 202.

The upper surface 222 is spaced apart from the lower surface 224 to provide a thickness dimension to the body portion 202 of the push button 200.

The elastomeric member 208 is deformed by the contact element of the structure to provide the biasing force back towards the first position. In the example shown, the distal end 206 includes a pair of support members 218 spaced apart in a direction substantially perpendicular to the first direction. The support members 218 are disposed along the distal end 206 of the body portion 202.

The elastomeric member 208 is a band including a central portion 220 and a loop at opposing ends thereof. Each loop is mounted to a support members 218 so that the elastomeric member 208 extends lengthwise between the support members 218. The central portion 220 of the elastomeric member 208 is disposed to be engageable with the contact element of a structure to which the push button 200 is mounted. In this way, as the push button 200 is moved towards the second position the elastomeric member 208, is deformed in a transverse direction to provide the biasing force. Stated differently, tension is applied to the elastomeric member 208 to provide the biasing force by deforming the elastomeric member 208 in a transverse direction.

In the example shown, the elastomeric member 208 is coupled to the push button 200 by mounted each loop around a respective support member 218. The elastomeric member 208 thereby may be uncoupled from the push button 200 by demounting each loop from the support member 218.

The body portion 202 is dimensioned to be mounted to a structure for use. For example, the thickness of the body portion 202 is adapted to engage a suitably-sized slot on the structure to receive the push button 200 therein.

The push button 200 includes a pair of guide elements provided on opposing sides of the body portion 202. A first guide element 214a extends along the first side of the body portion 202 in a direction parallel to the first axis. A second guide element 214b extends along a second side of the body portion 202, also in a direction parallel to the first axis.

Each guide element 214a, 214b is engageable with a respective mating portion provided on the structure, for example mating portions within a slot on the structure. Typically, the mating portion may include an elongate channel sized and oriented to receive a guide element. Each guide element 214a, 214b is configured to cooperatingly engage with the respective mating portion to constrain the push button 200 to move linearly relative to the structure. Each guide element 214a, 214b extends parallel to the first axis to constrain the push button 200 to move in the first direction.

The push button 200 includes a stop member 212. The stop member 212 is provided at the distal end 206 of the push button 200. The stop member 212 extends from the distal end 206 to project away from the lower surface 224 of the push button 200. The stop member 212 projects below the plane of the body portion 202 of the push button 200.

The push button 200 includes an opening 210, extending through the body portion 202 in a second direction, perpendicular to the plane of the body portion 202.

The opening includes an inner perimeter wall with a locking tab 216 extending from the inner perimeter wall, into the opening 210.

The push button 200 is formed of a thermoplastic material, typically polypropylene, so as to be manufacturable by an injection moulding process.

The elastomeric member 208 is formed of a thermoplastic polyurethane material. The properties of the elastomeric member 208 may be adapted to provide suitable resilience to deformation so that the band is easily deformed by the action of the user to press the push button, and to provide sufficient biasing force towards the first position when under tension in order to provide an effective lock of the adjustable component to the vehicle component.

In use, the push button 200 facilitates convenient adjusting of the adjustable component.

In the example shown, the structure is a headrest guide assembly mounted to a vehicle seat, and the adjustable component is an adjustable seat headrest. The seat headrest includes a cylindrical rod as described herein.

The push button 200 is mounted to a headrest guide assembly for use. The headrest guide assembly includes the push button 200 to selectively lock and unlock the seat headrest to the vehicle seat.

The push button 200 may be received in a suitable slot provided on the headrest guide assembly so as to be movably mounted relative to the vehicle seat. Once mounted, the push button 200 is moveable between a first a first position, in which the push button locks the headrest to the seat, and a second position, in which the headrest is unlocked from the seat.

The opening 210 through the push button 200 is dimensioned to receive a cylindrical rod of the headrest therethrough. The cylindrical rod is moveable within the opening 210, subject to the locking and unlocking to the seat provided by the push button 200.

The cylindrical rod includes a series of notches therealong. In this way, the adjustable component may be locked to the structure by selecting which notch is engaged by the locking tab 216, thereby selecting the position of the adjustable component relative to the structure. The locking tab 116 extends into the opening 210. The locking tab 216 is matingly engageable with a complementary notch on the cylindrical rod when the push button is in the first position.

In the first position, the locking tab 216 of the push button 200 engages the notch on the cylindrical rod, to lock the headrest to the seat. The push button 200 is in the first position relative to the headrest guide assembly such that the seat headrest is locked to the vehicle seat at a first seat headrest height. In the first position the elastomeric member 208 is in a first condition.

In the example, in the first condition, the elastomeric member 208 is in a relaxed condition such that it is substantially un-deformed. Stated differently, the elastomeric member 208 is held without being under either tension or compression.

To adjust the seat headrest height, a user presses the push button 200. The push button 200 thereby moves relative to the headrest guide assembly. The push button 200 moves in the first direction by the action of the user. In this way, the elastomeric member 208 is moved into engagement with a contact element provided in the headrest guide assembly.

The user continues to press the push button 200 so it is moved from the first position to the second position, unlocking the seat headrest from the vehicle seat. In the second position, the locking tab 216 is displaced in the first direction and disengages from the notch of the cylindrical rod. The headrest is thereby unlocked from the seat.

In the second position, the elastomeric member 208 is deformed by the contact element. The elastomeric member 208 is in a second condition so that the elastomeric member is held in tension.

With the seat headrest unlocked, the user is free to move the seat headrest to a second seat headrest height. Optionally, the user may maintain pressure on the push button 200 while adjusting the seat headrest height to ensure the push button 200 remains in the second position. Optionally, the user may release their pressure on the push button 200 and the push button 200 is prevented from moving back towards the first position by a notch-free portion of the cylindrical rod abutting the locking tab 216.

When the seat headrest is at the second headrest height, a second notch is aligned with the locking tab 216. Action on the push button 200 to maintain it in the second position is released when the seat headrest is at the second headrest height. The elastomeric member 208 is free to recover from the second condition to the first condition. The tension applied to the elastomeric member 208 in the second position provides a biasing force to move the push button 200 back towards the first position.

As the push button 200 moves back towards the first position, the locking tab 216 engages the second notch of the cylindrical rod. The seat headrest is thereby locked to the vehicle seat at the second headrest height.

As the push button 200 returns to the first position from the direction of the second position, the stop member 212 abuttingly engages a corresponding stop feature on the headrest guide assembly. The stop member 212 thereby limits the push button at the first position when the biasing force moves the push button back to the first position. That is, once the push button 200 is mounted to a headrest guide assembly, the stop member 212 prevents push button 200 from sliding out of the receiving slot and becoming dismounted from the headrest guide assembly.

Fig. 2 illustrates a new design for the typical spring-biased or spring-loaded push buttons or press buttons or a spring-loaded fasteners that is currently used for headrest guides and the adjustment mechanism. In particular, the metal spring of the button is replaced by an elastomeric member or elastomeric band that is operably coupled to a distal portion of the button member so as to provide a bias when engaged, i.e. the distal end of the button is pushed into engagement with an external structure, thus stretching the elastomeric band and causing a spring force to push or bias the button back towards its starting position.

As mentioned above, the elastomeric band may comprise a loop that is mounted to respective support members (pegs, see Fig. 2). The elastomeric band may be preloaded or pre-stretched to so as to provide a predetermined spring force when engaged. The pre-load (i.e. stretch) of the elastomeric band may be adjustable, e.g. by adjusting the distance between the respective support members.

However, it should be understood that the elastomeric member could made from any non-metallic (e.g. polymer) material suitable to provide a spring-force, For example, the material may include a resilient elastomer, a Thermoplastic PolyUrethane (TPU), Silicone material etc. The elastomeric member or band may be assembled or mounted to the button. Alternatively, the elastomeric member may be moulded with or overmoulded to the button structure, e.g. via 2k (two component moulding).

Referring now to FIG. 3, there is shown another example push button 300 according to an aspect. Where a feature are the same as an earlier example the reference numerals are also the same but with an initial digit of '2'. The push button 300 includes a body portion 302 including a proximal end 304, contactable by a user, and a distal end 306 comprising an alternative elastomeric member 308.

The push button 300 is operably mountable to a structure in the same way as the example described with reference to FIG. 2, and includes a corresponding body portion 302 which is planar with an opening 310 extending therethrough.

The elastomeric member 308 includes a pair of projecting members extending away from the distal end 306 along a lengthwise axis L. In the example, the projecting members each include a bellows portion arranged so that the central axis of the bellows portion provides the lengthwise axis L. The bellows portions are each disposed to be engageable with the contact element of a structure to which the push button 200 is mounted. In this way, as the push button 200 is moved towards the second position, the bellows portions of the elastomeric member 308 are deformed in a lengthwise direction to provide the biasing force.

In the example shown the elastomeric member 308 includes pair of projecting members, but any suitable number of projecting members may be provided at the distal end 306. For example, one, two, three or more projecting members may be provided. The projecting members may be spaced apart from each other or oriented in any suitable arrangement so as to provide an elastomeric member that is compressed along a lengthwise axis L to provide the biasing force.

The push button 300, typically at least the body portion 302 of the push button 300, is formed of a thermoplastic material such as polypropylene. In this way, the push button 300 is manufacturable by an injection moulding process.

The elastomeric member 308 is formed of a thermoplastic polyurethane material. The material of the elastomeric member 308 may be selected to be compatible with the material of the remainder of the push button 300 so that the push button 300 is manufacturable by a two-step moulding process. Thus, the body portion 302 is formed by a first injection moulding step, and then the elastomeric member 308 is overmoulded onto the distal end 306 of the body portion 302 in a subsequent injection moulding step. In this way, manufacturing is simplified as the push button 300 is formed without requiring assembly of its component parts.

The push button 300 is configured to be mountable in an assembly for use in the same way as the example described with reference to FIG. 2. The push button 300 is used in the same way other than, in the second position, the elastomeric member 308 is held in under compression. That is, in moving from a first position to a second position, the elastomeric member 308 changes from a relaxed, first condition, to a compressed, second condition.

In this way, as the push button 300 is released from the second position the compression applied to the elastomeric member 308 in the second position provides a biasing force to move the push button 300 back towards the first position.

The properties of the elastomeric member 308 may be adapted to provide suitable resilience to deformation so that the band is easily deformed by the action of the user to press the push button, and to provide sufficient biasing force towards the first position by compression of the elastomeric member 308 in order to provide an effective lock of the adjustable component to the vehicle component.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A push button (200, 300), comprising:
- a body portion (202, 302) comprising a proximal end (204, 304), contactable by a user, and a distal end (206, 306) comprising an elastomeric member (208, 308) operably coupled to the distal end (206, 306) of the body portion (202, 302) and arranged to engage a contact element of a structure;
wherein the push button (200, 300) is operably mountable to the structure and movable in a first direction from a first position, in which the push button (200, 300) locks an adjustable component to the structure, to a second position in which the adjustable component is unlocked from the structure; and
wherein the elastomeric member (208, 308) is configured to provide a biasing force back towards the first position when the push button (200, 300) is moved towards the second position.

2. A push button according to claim 1,
wherein the elastomeric member is deformed by the contact element to provide the biasing force back towards the first position.

3. A push button according to claim 1 or 2,
wherein the distal end includes a pair of support members spaced apart in a direction substantially perpendicular to the first direction, and wherein the elastomeric member extends lengthwise between the support members so as to be deformed in a transverse direction to provide the biasing force.

4. A push button according to claim 3,
wherein the elastomeric member adjoins each support member at a connection zone, typically wherein the connection zone is formed by over-moulding or co-moulding the elastomeric member to each support member.

5. A push button according to claim 1 or 3,
wherein the elastomeric member includes at least one projecting member extending away from the distal end along a lengthwise axis, and wherein the projecting member is configured as to be elastically compressed along the lengthwise axis to provide the biasing force.

6. A push button according to claim 5,
wherein the elastomeric member includes a cylinder portion or a bellows portion arranged so that a central axis of the cylinder portion or the bellows portion provides the lengthwise axis.

7. A push button according to any one of claims 1 to 6,
wherein, in the first position, the elastomeric member is partially deformed to provide a preloaded biasing force.

8. A push button according to any one of claims 1 to 7,
further comprising at least one guide element engageable with a respective mating portion provided on the structure so as to constrain the push button to move linearly relative to the structure.

9. A push button according to any one of claims 1 to 8,
further comprising a stop member configured to limit the push button at the first position when the biasing force moves the push button back to the first position.

10. A push button according to any one of claims 1 to 9,
wherein the elastomeric member comprises a material including at least one of: a thermoplastic polyurethane, a thermoplastic elastomer, or a silicone rubber.

11. A push button according to any one of claims 1 to 10,
wherein the elastomeric member is co-moulded with the body portion.

12. An assembly comprising a push button according to any one of claims 1 to 11 moveably mounted therein,
wherein the assembly is a headrest guide assembly, a sleeve assembly, or a locking mechanism for a vehicle component.

13. An assembly according to claim 12,
wherein the assembly is mounted to a vehicle structure, typically a vehicle seat, and wherein the adjustable component, typically a headrest, is mounted to the vehicle structure to be movable relative to both the vehicle structure and the assembly.

14. An assembly according to claim 12,
wherein the assembly is mounted to the adjustable component, typically a headrest, and wherein the adjustable component, including the assembly, is mounted to the vehicle structure to be movable relative to the vehicle structure.
